# EUROPEAN PATENT APPLICATION

(11) **EP 3 150 949 A1**
(43) Date of publication of application: **05.04.2017**
(21) Application number: 15799736.2
(22) Date of filing: 22.05.2015
(51) Int. Cl.: F28D 7/10, F01N 5/02, F02G 5/02, F28F 1/00

(54) **EXHAUST HEAT RECOVERY DEVICE AND MANUFACTURING METHOD FOR SAME**

(30) Priority: 26.05.2014 JP 2014107995
(71) Applicant: Calsonic Kansei Corporation, Saitama-shi, Saitama 331-8501 (JP)
(72) Inventor: ICHIYANAGI, Youhei, Saitama-shi Saitama 331-8501 (JP); KITAMORI, Satoshi, Saitama-shi Saitama 331-8501 (JP)
(74) Representative: Grünecker Patent- und Rechtsanwälte PartG mbB
(86) International application number: PCT/JP2015/064805
(87) International publication number: WO 2015/182526

(57) **Abstract**

An exhaust gas heat recovery device includes an inner cylinder, a first fluid passage that is formed in the inner cylinder and in which first fluid flows, an outer cylinder that is formed by at least two divided bodies to surround the inner cylinder, and a second fluid passage that is formed between the inner cylinder and the outer cylinder and in which second fluid flows.

## Description

### TECHNICAL FIELD

The present invention relates to an exhaust gas heat recovery device and a manufacturing method threreof.

### BACKGROUND ART

Various types of exhaust gas heat recovery devices each of which recovers exhaust gas heats of an internal combustion engine are proposed. For example, an exhaust gas heat recovery device 100 shown in Fig. 8 is disclosed in a Patent Document 1 listed below. The exhaust gas heat recovery device 100 includes an inner cylinder 101, and an outer cylinder 102 that surrounds the inner cylinder 101. A first fluid passage 103 in which first fluid (heat source) flows is formed in the inner cylinder 101. A heat recovery member 105 for recovering exhaust gas heats is disposed in the first fluid passage 103.

The outer cylinder 102 includes inner cylinder holding portions 107 that hold the inner cylinder 101, an outer circumferential wall 109 to which pipes 113 are connected, and a second fluid passage 111 that is formed between the outer cylinder 102 and the inner cylinder 101. A second fluid flows into the second fluid passage 111 through one of the pipes 113, and then flows out from the second fluid passage 111 through another of the pipes 113. Since the inner cylinder 101 is inserted into the outer cylinder 102, heats of the first fluid is recovered by the second fluid flowing in the second fluid passage 111 while the first fluid flows in the first fluid passage 103.

### Prior Art Document

### Patent Documents

Patent Document 1: Japanese Patent Application Publication No. 2012-37165

### SUMMARY OF INVENTION

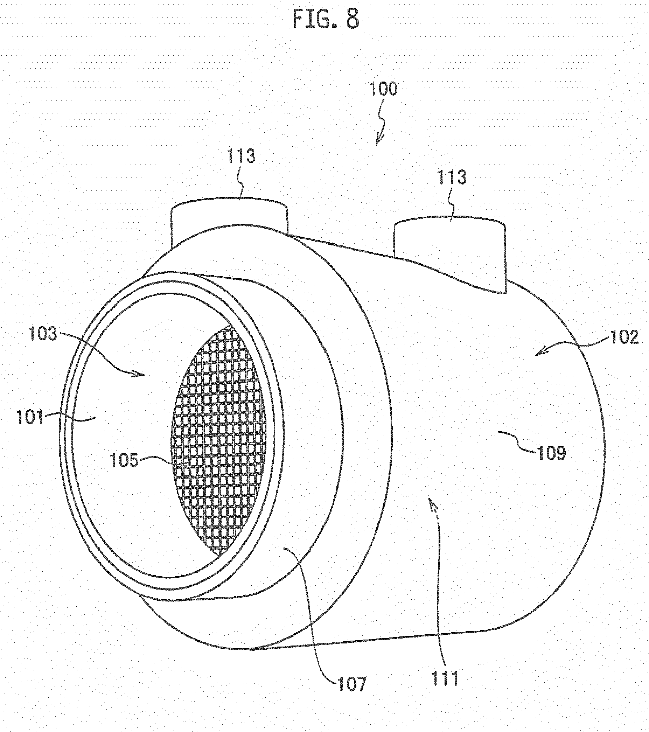

In the exhaust gas heat recovery device 100 shown in Fig. 8, the outer cylinder 102 must be manufactured by extrusion molding, spinning molding and so on. Therefore, it takes much time to manufacture the outer cylinder(s) 102 and its manufacturing costs become high, so that the outer cylinder 102 is not suitable for mass-production.

An object of the present invention is to provide an exhaust gas heat recovery device that can be manufactured easily and can reduce its manufacturing costs, and a manufacturing method threreof.

A first aspect of the present invention provides an exhaust gas heat recovery device comprising: an inner cylinder; a first fluid passage that is formed in the inner cylinder and in which first fluid flows; an outer cylinder that is formed by at least two divided bodies to surround the inner cylinder; and a second fluid passage that is formed between the inner cylinder and the outer cylinder and in which second fluid flows.

A second aspect of the present invention provides a manufacturing method of an exhaust gas heat recovery device, wherein the exhaust gas heat recovery device comprises an inner cylinder, a first fluid passage that is formed in the inner cylinder and in which first fluid flows, an outer cylinder that is formed by at least two divided bodies to surround the inner cylinder, and a second fluid passage that is formed between the inner cylinder and the outer cylinder and in which second fluid flows, the method comprising: forming the at least two divided bodies; forming the outer cylinder by joining the at least two divided bodies at butted portions of the at least two divided bodies; and attaching the outer cylinder onto the inner cylinder to form the second fluid passage between the inner cylinder and the outer cylinder.

According to the first or second aspect, the outer cylinder is formed so as to surround the inner cylinder, and the at least of two divided bodies for forming the outer cylinder can be formed easily by press working or the like. Therefore, the exhaust gas heat recovery device can be manufactured at low manufacturing costs and easily.

### BRIEF DESCRIPTION OF DRAWINGS

**[****Fig. 1****]** It is a perspective view of an outer cylinder of an exhaust gas heat recovery device according to a first embodiment.
[**Fig**. **2****]** It is an exploded perspective view of the outer cylinder.
**[****Fig. 3****]** It is a cross-sectional view of the exhaust gas heat recovery device.
**[****Fig. 4****]** It is a perspective view of an outer cylinder of an exhaust gas heat recovery device according to a second embodiment.
**[****Fig. 5****]** It is a cross-sectional view of the exhaust gas heat recovery device.
**[****Fig. 6****]** It is a perspective view of an outer cylinder of an exhaust gas heat recovery device according to a third embodiment.
**[****Fig. 7****]** It is a cross-sectional view of the exhaust gas heat recovery device.
**[****Fig. 8****]** It is a perspective view of a prior-art exhaust gas heat recovery device.

### DESCRIPTION OF EMBODIMENTS

### [FIRST EMBODIMENT]

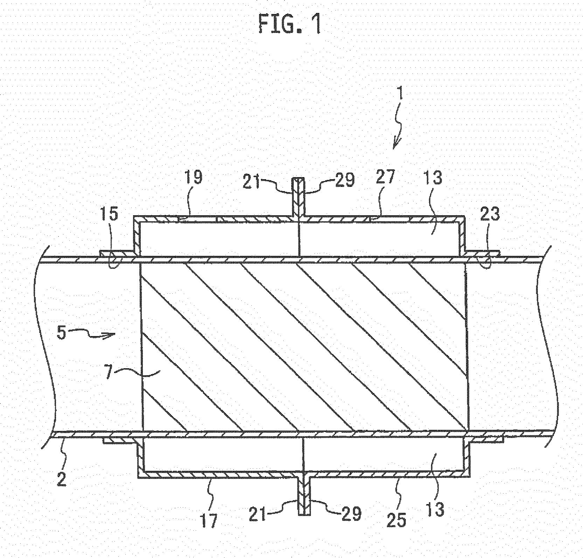

An exhaust gas heat recovery device 1 according to the present invention and a manufacturing method threreof will be described with reference to Fig. 1 to Fig. 3.

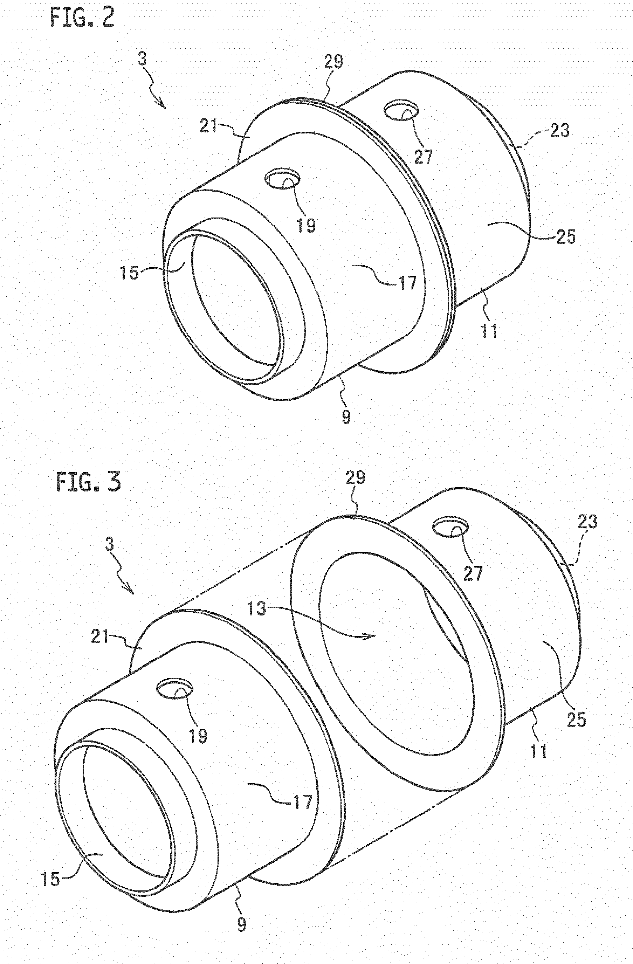

As shown in Fig. 1, the exhaust gas heat recovery device 1 includes an inner cylinder 2 in which first fluid flows, and an outer cylinder 3 (see Fig. 2) that surrounds the inner cylinder 2. The outer cylinder 3 is configured of two divided bodies 9 and 11. A first fluid passage 5 in which the first fluid flows is formed in the inner cylinder 2. A heat recovery member 7 for recovering exhaust gas heats of the first fluid is accommodated in the first fluid passage 5. The heat recovery member 7 has a honeycomb structure or a structure made by stacking tubes or fins or the like for flowing the first fluid. The heat recovery member 7 may be sufficient, so long as it has a configuration that enables of recovering heats of the first fluid (accumulating heats and then exchanging the heats with the second fluid through the inner cylinder 2).

As shown in Fig. 2 and Fig. 3, the outer cylinder 3 is configured of the first divided body 9 and the second divided body 11 that are formed from a sheet member (s) . A second fluid passage 13 in which the second fluid flows is formed between an inner circumference of the outer cylinder 3 and an outer circumference of the inner cylinder 2.

An inner cylinder holding portion (stepped neck) 15 that holds the inner cylinder 2 is formed on one side (the first divided body 9) of the outer cylinder 3. In addition, an inner cylinder holding portion 23 that holds the inner cylinder 2 is also formed on another side (the second divided body 11) of the outer cylinder 3. A portion of the outer cylinder 3 (the first divided body 9 and the second divided body 11) except the inner cylinder holding portions 15 and 23 forms an outer circumferential wall 17 whose inner diameter is larger than the inner cylinder 2. A pipe connecting hole 19 to which a pipe (not shown in the drawings) is connected is formed on the outer circumferential wall 17 on a side of the first divided body 9. A flange (butted portion) 21 is expanded outward from an end (a joining portion with the second divided body 11) of the first divided body 9 on an opposite side to the inner cylinder holding portion 15. Similarly, a pipe connecting hole 27 to which a pipe (not shown in the drawings) is connected is formed also on the outer circumferential wall 17 on a side of the second divided body 11. A flange (butted portion) 29 is expanded outward from an end (a joining portion with the first divided body 11) of the second divided body 11 on an opposite side to the inner cylinder holding portion 23.

Note that each inner diameter of the inner cylinder holding portions 15 and 23 is almost equal to an outer diameter of the inner cylinder 2. In addition, although the pipe connecting holes 19 and 27 are provided on the first divided body 9 and the second divided body 11, respectively, they may be provided on only one of the first divided body 9 and the second divided body 11.

As shown in Fig. 1, the second fluid passage 13 in which the second fluid flows is formed between the inner cylinder 2 in which the first fluid flows and the outer cylinder 3 that is provided so as to surround the inner cylinder 2. The second fluid flows into the second fluid passage 13 through one of the pipe connecting holes 19 and 27, and then flows out from the second fluid passage 13 through another of them. While the first fluid flows in the first fluid passage 5, heats of the first fluid are recovered by the second fluid that flows in the second fluid passage 13.

Next, a manufacturing method of the exhaust gas heat recovery device 1 will be described. First, the heat recovery member 7 is accommodated in the first fluid passage 5 of the inner cylinder 2 (inner cylinder sub-assembling process). Next, the first divided body 9 and the second divided body 11 that will constitute the outer cylinder 3 are formed by press working or the like (divided body forming process). Subsequently, the flanges (butted portions) 21 and 29 are butted (planarly contacted) with each other, and then joined with each other by welding or the like to form the outer cylinder 3 (outer cylinder sub-assembling process). Last, the inner cylinder 2 is inserted into the outer cylinder 3, and the inner cylinder holding portions 15 and 23 are fixed with the inner cylinder 2 by welding or the like. As the result, the second fluid passage 13 is formed between the inner cylinder 2 and the outer cylinder 3, and thereby the exhaust gas heat recovery device 1 is completed (final assembling process).

According to the present embodiment, since the divided bodies 9 and 11 are (the outer cylinder 3 is) formed so as to surround the inner cylinder 2, it becomes possible to recover heats of the first fluid flowing in the first fluid passage 5 by the second fluid flowing the second fluid passage 13 (to change heats between the first fluid and the second fluid). In addition, since each of the first divided body 9 and the second divided body 11 that constitute the outer cylinder 3 is formed from a sheet member (s), it becomes possible to manufacture the first divided body 9 and the second divided body 11 easily by press working or the like. Therefore, it becomes possible to mass-produce the exhaust gas heat recovery devices 1 at low costs and easily.

### [SECOND EMBODIMENT]

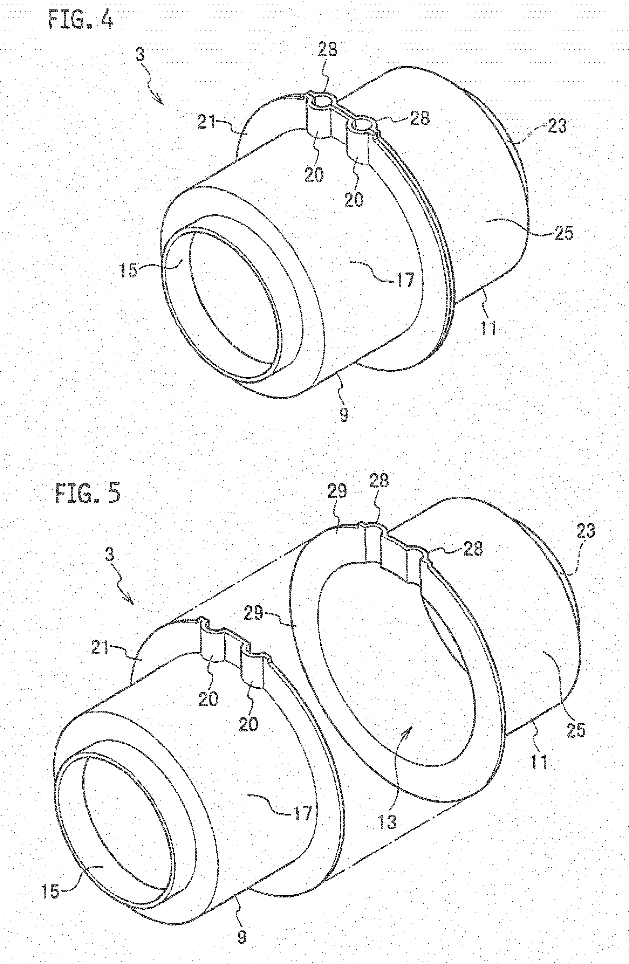

An exhaust gas heat recovery device 1 according to the present invention and a manufacturing method threreof will be described with reference to Fig. 4 and Fig. 5. Note that configurations identical or equivalent to those in the above-described first embodiment will be labelled with identical reference signs, and their detailed descriptions will be omitted.

In the present embodiment, as shown in Fig. 4 and Fig. 5, pipes (20 and 28) are formed at a flange (butted portion) 21 of the first divided body 9 and a flange (butted portion) 29 of the second divided body 11. Each of the pipes (20 and 28) formed on the first divided body 9 and the second divided body 11 has a half-cylindrical shape. When the flange 21 of the first divided body 9 and the flange 29 of the second divided body 11 are butted (planarly contacted) with each other and then joined each other, the cylindrical pipes are formed by the pipes 20 of the first divided body 9 and the pipes 28 of the second divided body 11.

According to the present embodiment, in addition to the advantages brought by the above-described first embodiment, it becomes possible to form the pipes (20 and 28) concurrently with forming the first divided body 9 and the second divided body 11 by press working or the like. In addition, a process for forming the pipe connecting holes can be omitted, so that it becomes possible to mass-produce the exhaust gas heat recovery devices 1 more efficiently.

### [THIRD EMBODIMENT]

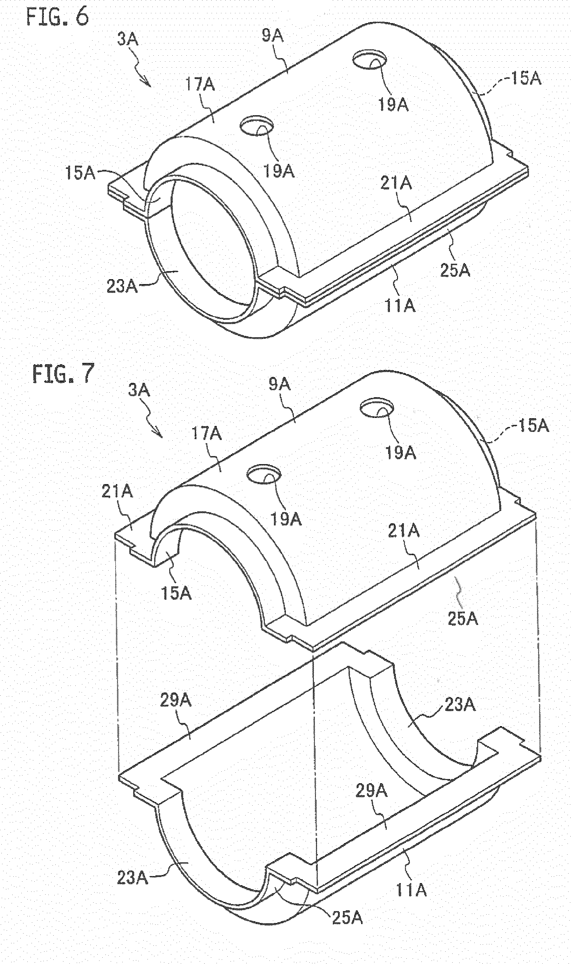

An exhaust gas heat recovery device 1 according to the present invention and a manufacturing method threreof will be described with reference to Fig. 6 and Fig. 7. Note that configurations identical or equivalent to those in the above-described first and second embodiments will be labelled with identical reference signs, and their detailed descriptions will be omitted.

In the present embodiment, as shown in Fig. 5 and Fig. 6, an outer cylinder 3A is divided parallel to an axial direction of the inner cylinder 2. As shown in Fig. 6, flanges (butted portions) 21A are formed at an end (a joining portion with a second divided body 11A) of a first divided body 9A (an inner cylinder holding portion 15A and an outer circumferential wall 17A). Similarly, flanges (butted portions) 29A are also formed at an end (a joining portion with the first divided body 9A) of the second divided body 11A (an inner cylinder holding portion 23A and an outer circumferential wall 25A). In addition, pipe connecting holes 19A are formed on the outer circumferential wall 17A of the first divided body 9A. No pipe connecting holes 19A is formed on the outer circumferential wall 25A of the second divided body 11A. Also in the present embodiment, the flanges 21A of the first divided body 9A and the flanges 29A of the second divided body 11A are planarly contacted with each other, and then joined with each other by welding or the like to form the outer cylinder 3A.

According to the present embodiment, the advantages brought by the above-described first embodiment can be also brought.

The present invention is not limited to the above embodiments. Although the outer cylinder 3 (3A) is divided into the first divided body 9 (9A) and the second divided body 11 (11A) in the above embodiments, it may be into three or more. However, if the number of divided bodies increases, the number of parts increases and thereby their manufacturing becomes complicated. Therefore, it is most preferable to divide it into two. In addition, although the first fluid is a heat source in the above embodiments, the second fluid may be a heat source.

## Claims

1. An exhaust gas heat recovery device comprising:
an inner cylinder;
a first fluid passage that is formed in the inner cylinder and in which first fluid flows;
an outer cylinder that is formed by at least two divided bodies to surround the inner cylinder; and
a second fluid passage that is formed between the inner cylinder and the outer cylinder and in which second fluid flows.

2. The exhaust gas heat recovery device according to claim 1, wherein
each of the at least two divided bodies is formed by press working.

3. The exhaust gas heat recovery device according to claim 1 or 2, wherein
each of the at least two divided bodies has a butted portion at a joining portion with a remaining adjacency of the at least two divided bodies.

4. The exhaust gas heat recovery device according to claim 3, wherein
a pair of pipes for flowing the second fluid into and out-from the second fluid passage is formed at the butted portions of the at least two divided bodies.

5. The exhaust gas heat recovery device according to any one of claims 1 to 4, further comprising:
a heat recovery member that accumulates heats and is disposed at a position in the inner cylinder and on an inner side of the second fluid passage.

6. A manufacturing method of an exhaust gas heat recovery device, wherein
the exhaust gas heat recovery device comprises an inner cylinder, a first fluid passage that is formed in the inner cylinder and in which first fluid flows, an outer cylinder that is formed by at least two divided bodies to surround the inner cylinder, and a second fluid passage that is formed between the inner cylinder and the outer cylinder and in which second fluid flows,
the method comprising:
forming the at least two divided bodies;
forming the outer cylinder by joining the at least two divided bodies at butted portions of the at least two divided bodies; and
attaching the outer cylinder onto the inner cylinder to form the second fluid passage between the inner cylinder and the outer cylinder.

7. The manufacturing method of an exhaust gas heat recovery device according to claim 6, wherein
each of the at least two divided bodies is formed by press working.

8. The manufacturing method of an exhaust gas heat recovery device according to claim 6 or 7, further comprising:
attaching a heat recovery member that accumulates heats at a position in the inner cylinder and on an inner side of the second fluid passage.

## Amended claims

### Amended claims under Art. 19.1 PCT

**1.** (Amended) An exhaust gas heat recovery device comprising:
an inner cylinder;
a first fluid passage that is formed in the inner cylinder and in which first fluid flows;
an outer cylinder that is formed by at least two divided bodies to surround the inner cylinder; and
a second fluid passage that is formed between the inner cylinder and the outer cylinder and in which second fluid flows, wherein
each of the at least two divided bodies has a butted portion at a joining portion with a remaining adjacency of the at least two divided bodies, and
a pair of pipes for flowing the second fluid into and out-from the second fluid passage is formed at the butted portions of the at least two divided bodies.

**2.** Cancelled)

**3.** Cancelled)

**4.** Cancelled)

**5.** (Amended) The exhaust gas heat recovery device according to claim 1, further comprising:
a heat recovery member that accumulates heats and is disposed at a position in the inner cylinder and on an inner side of the second fluid passage.

**6.** A manufacturing method of an exhaust gas heat recovery device, wherein
the exhaust gas heat recovery device comprises an inner cylinder, a first fluid passage that is formed in the inner cylinder and in which first fluid flows, an outer cylinder that is formed by at least two divided bodies to surround the inner cylinder, and a second fluid passage that is formed between the inner cylinder and the outer cylinder and in which second fluid flows,
the method comprising:
forming the at least two divided bodies;
forming the outer cylinder by joining the at least two divided bodies at butted portions of the at least two divided bodies; and
attaching the outer cylinder onto the inner cylinder to form the second fluid passage between the inner cylinder and the outer cylinder.

**7.** The manufacturing method of an exhaust gas heat recovery device according to claim 6, wherein
each of the at least two divided bodies is formed by press working.

**8.** The manufacturing method of an exhaust gas heat recovery device according to claim 6 or 7, further comprising:
attaching a heat recovery member that accumulates heats at a position in the inner cylinder and on an inner side from the second fluid passage.
